Europäisches Patentamt

European Patent Office

Office européen des brevets

(19)

(11) **EP 0 624 847 B1**

## (12) FASCICULE DE BREVET EUROPEEN

(45) Date de publication et mention
de la délivrance du brevet:
**04.08.1999 Bulletin 1999/31**

(51) Int Cl.6: **G06F 17/17, G06F 17/18**

(21) Numéro de dépôt: **94201267.5**

(22) Date de dépôt: **06.05.1994**

(54) **Dispositif et méthode pour générer une fonction d'approximation**

Vorrichtung und Verfahren zur Erzeugung einer annähernden Funktion

Device and method to generate an approximating function

(84) Etats contractants désignés:
**DE FR GB IT**

(30) Priorité: **12.05.1993 FR 9305715**

(43) Date de publication de la demande:
**17.11.1994 Bulletin 1994/46**

(73) Titulaires:
- **LABORATOIRES D'ELECTRONIQUE PHILIPS S.A.S.**
  **94450 Limeil-Brévannes (FR)**
  Etats contractants désignés:
  **FR**
- **Koninklijke Philips Electronics N.V.**
  **5621 BA Eindhoven (NL)**
  Etats contractants désignés:
  **DE GB IT**

(72) Inventeur: **Deville, Yannick**
  **156, Boulevard Haussmann, F-75008 Paris (FR)**

(74) Mandataire: **Landousy, Christian et al**
  **Société Civile S.P.I.D.**
  **156, Boulevard Haussmann**
  **75008 Paris (FR)**

(56) Documents cités:
**US-A- 4 774 685**

- **INTERNATIONAL JOURNAL OF COMPUTER VISION, vol.6, no.1, Avril 1991, NORWELL US pages 59 - 70, XP000215767 P.MEER ET AL 'ROBUST REGRESSION METHODS FOR COMPUTER VISION: A REVIEW'**
- **NTIS TECH NOTES, Octobre 1988, SPRINGFIELD, VA US page 850, XP000051332 'RECURSIVE ALGORITHM FOR LINEAR REGRESSION'**
- **IEEE TRANSACTIONS ON INFORMATION THEORY, vol.38, no.4, Juillet 1992, NEW YORK US pages 1323 - 1338, XP000287141 ADAM KRZYZAK 'GLOBAL CONVERGENCE OF THE RECURSIVE KERNEL REGRESSION ESTIMATES WITH APPLICATIONS IN CLASSIFICATION AND NONLINEAR SYSTEM ESTIMATION'**
- **PROCEEDINGS OF THE IJCNN-91-SEATTLE. IEEE PRESS NEW YORK US, vol.1, 8 Juillet 1991, SEATTLE US pages 79 - 84, XP000238272 V.CHERKASSKY ET AL 'SELF-ORGANIZING NETWORK FOR REGRESSION: EFFICIENT IMPLEMENTATION AND COMPARATIVE EVALUATION'**

## Description

L'invention concerne un dispositif et une méthode pour générer une fonction d'approximation, celle-ci étant fondée sur des premiers couples de valeurs associant une grandeur dépendante à une grandeur indépendante, et pour déterminer des seconds couples de valeurs desdites grandeurs à partir de ladite fonction d'approximation.

Un dispositif et une méthode de ce type sont connus du brevet US-A- 3 789 203 qui décrit un générateur de fonctions opérant une approximation par interpolation itérative. Ce dispositif est prévu pour être utilisé dans des applications de traitement de données nécessitant un calcul de fonctions telles que sin(x), tg(x) par exemple. Ce dispositif ne requiert qu'une capacité de stockage minimale de la part d'un dispositif utilisateur. A partir de deux points appartenant à une fonction à interpoler, la méthode tout d'abord interpole la fonction par une droite reliant les deux points, puis fait une approximation des écarts entre la droite et la fonction par des approximations polynômiales de degré croissant. Ensuite elle substitue aux points initiaux des points approximatifs pour réduire la longueur du segment reliant les points à traiter et enfin réitère les opérations précédentes.

Une telle méthode nécessite des ressources importantes en moyens de calcul et ne peut être mise en oeuvre qu'avec des calculateurs performants.

Or, il existe des applications où une telle méthode ne peut pas être mise en oeuvre car elles ne disposent pas des ressources suffisantes. De plus, pour certaines applications on peut se satisfaire d'un calcul approché de la fonction pour des valeurs, en nombre limité, de la grandeur indépendante.

Il peut s'agir d'une fonction sigmoïde appliquée à des potentiels neuronaux délivrés par au moins un neurone dans un réseau de neurones. Il peut s'agir d'une autre fonction non linéaire, par exemple une fonction racine, pour des calculs de distances entre des états de neurones. Les applications peuvent aussi concerner d'autres dispositifs comme des générateurs de fonctions, des calculateurs ou autres.

Pour calculer une telle fonction, sans passer par une fonction d'approximation, on peut utiliser différentes manières.

On peut effectuer le calcul mathématique exact pour chaque valeur de la grandeur indépendante à traiter, en programmant un calculateur selon les méthodes connues. Une telle méthode nécessite d'effectuer à chaque fois les mêmes opérations ce qui peut nécessiter beaucoup de temps si le nombre de valeurs est élevé.

On peut aussi préalablement stocker dans une mémoire des tables précalculées. Dans ce cas, la lecture en mémoire du résultat peut être rapide. Mais pour couvrir avec un pas assez fin toutes les valeurs possibles de la grandeur indépendante, il faut alors disposer de tables de grandes capacités. Ces méthodes de calcul présentent donc des inconvénients.

D'autre part, on peut être conduit à identifier deux grandeurs qui sont dans la dépendance l'une de l'autre par des couples de valeurs associant une grandeur dépendante à une grandeur indépendante. Ainsi, dans le suivi d'un processus industriel, on peut être conduit à mesurer par exemple un rendement R d'une opération en fonction de la température T à laquelle a été réalisée ladite opéation R = f(T) . Un suivi du processus peut consister à consigner des lots de couples de mesures sur un graphique. Celui-ci peut être utilisé pour caractériser le processus ou pour en déduire de nouveaux paramètres de réglage de ladite opération. Ceci fait par exemple l'objet de l'article de H. ISHIBUCHI et H. TANAKA, "Régression analysis with interval model by neural networks" in "IEEE International Joint Conference on Neural Networks", vol. 2, 18-21 Nov. 1991, SINGAPORE. Il est souhaitable que ces nouveaux paramètres soient représentatifs du fondement de ladite opération et que les fluctuations de mesures inhérentes à ce genre de processus soient écartées. Il est donc souhaitable de déterminer une approximation de la fonction f(.).

Ainsi dans un cas il peut s'agir de mesures erratiques ou entachées d'erreurs que l'on désire représenter par une fonction d'approximation.

Dans un autre cas, on connaît des valeurs précises mais l'utilisation à en faire ne nécessite pas une grande précision et une fonction d'approximation suffit.

Un des buts de l'invention est de générer une fonction d'approximation avec des moyens matériels réduits permettant de calculer rapidement un nombre réduit de valeurs de la grandeur dépendante utiles à l'application sans avoir pour cela à déterminer d'autres valeurs de la fonction d'approximation. Un but complémentaire est de délivrer des valeurs qui peuvent être approchées dans la limite d'une erreur maximale contrôlée.

Ce but est atteint avec un dispositif caractérisé en ce qu'il comprend :

- des premiers moyens :

    - pour déterminer itérativemant au moins une fonction linéaire courante de régression en rendant égales, en valeur absolue, des premières erreurs de signes alternés mesurées entre des premières valeurs de la grandeur dépendante pour trois couples d'une suite desdits premiers couples, et respectivement des secondes valeurs de la grandeur dépendante déterminées, d'après ladite fonction linéaire courante, pour les mêmes valeurs de la grandeur indépendante,

- pour sélectionner celle des fonctions linéaires courantes qui délivre l'approximation de tous les couples de ladite suite avec des erreurs minimales,
- et pour coder, à l'aide de codes spécifiques, la fonction linéaire de régression sélectionnée,

- et des seconds moyens pour déterminer lesdits seconds couples à l'aide desdits codes spécifiques.

Ainsi avantageusement on détermine une fonction linéaire de régression approchant au mieux les différents couples de valeurs connus. Les résultats approchés ainsi délivrés forment un compromis satisfaisant pour de nombreuses utilisations du dispositif générateur de fonction.

Une fonction linéaire de régression est une fonction simplificatrice qui représente un phénomène complexe en réduisant les paramètres significatifs. En représentant la suite de couples de valeurs par des points dans un espace à deux dimensions, la fonction linéaire de régression devient une droite de régression.

Ainsi après avoir défini la droite de régression par des codes, on peut calculer une valeur approchée de la grandeur dépendante en tout point de la droite de régression avec des moyens réduits pour des valeurs quelconques de la grandeur indépendante.

L'invention concerne également une méthode pour générer une fonction d'approximation, la méthode comprenant :

- une première phase :

  - pour déterminer itérativement au moins une fonction linéaire courante de régression en rendant égales, en valeur absolue, des premières erreurs, de signes alternés, mesurées entre des premières valeurs de la grandeur dépendante pour trois couples d'une suite desdits premiers couples, et respectivement des secondes valeurs de la grandeur dépendante déterminées, d'après ladite fonction linéaire, pour les mêmes valeurs de la grandeur indépendante,
  - pour sélectionner celle des fonctions linéaires courantes qui délivre l'approximation de tous les couples de ladite suite avec des erreurs minimales,
  - et pour coder la fonction linéaire de régression sélectionnée à l'aide de codes spécifiques,

- et une seconde phase pour déterminer lesdits seconds couples à l'aide desdits codes spécifiques.

Les moyens mis en oeuvre par l'invention peuvent être formés par un calculateur programmé ou par un circuit dédié. Ils peuvent aussi mettre en oeuvre des neurones.

Un dispositif mettant en oeuvre des neurones selon l'invention peut être utilisé par un réseau de neurones, dont il peut notamment en constituer un sous-ensemble. En effet, pour fonctionner, le réseau de neurones doit disposer de moyens pour appliquer une fonction non linéaire d'activation aux potentiels de neurones qu'il délivre. Selon l'invention, le dispositif muni de neurones peut calculer une approximation de cette fonction non-linéaire d'activation. Il peut également calculer des distances entre des états de neurones en calculant une approximation d'une fonction racine carrée destinée à être exploitée dans le réseau de neurones.

Lorsque la taille de la suite de couples de valeurs fournis initialement est élevée, on peut diviser la suite de couples en plusieurs sous-ensembles pour déterminer plusieurs droites de régression et améliorer la précision de l'approximation. La fonction d'approximation de la suite de couples est alors formée par une fonction linéaire par morceaux pour laquelle une exigeance de continuité entre les morceaux peut être ou non imposée.

Certains couples de l'ensemble de couples de valeurs peuvent avoir une influence particulière que l'on peut concrétiser en donnant un coefficient de pondération spécifique à chaque couple. Dans ce cas, l'erreur affectée à chaque couple tient compte de ce coefficient de pondération spécifique.

Ces différents aspects de l'invention et d'autres encore seront apparents et élucidés à partir des modes de réalisation décrits ci-après. L'invention sera réalisée selon les revendications indépendantes 1 et 6 ci-jointes.

L'invention sera mieux comprise à l'aide des figures suivantes données à titre d'exemples non limitatifs qui représentent :

Figure 1 : un graphique montrant une représentation à deux dimensions d'un ensemble de points avec une droite de régression D.
Figure 2 : un graphique montrant un ensemble de points et des droites servant à la détermination d'une enveloppe.
Figure 3 : un organigramme d'une première variante de mise en oeuvre de la méthode à partir de triplets de points.
Figure 4 : un organigramme d'une seconde variante de mise en oeuvre de la méthode à partir de triplets de points.
Figure 5 : une partie d'organigramme d'une troisième variante de mise en oeuvre de la méthode à partir de couples de points.

Figure 6 : une partie d' organigramme indiquant une présélection de points appartenant à une enveloppe inférieure ou à une enveloppe supérieure de l'ensemble des points.

Figure 7 : un organigramme pour la détermination des enveloppes inférieure et supérieure.

Figure 8 : un schéma d'un dispositif selon l'invention.

Figure 9 : un schéma d'un dispositif de codage pour le calcul et le codage d'une droite de régression dans le cas général.

Figure 10 : un schéma d'un dispositif de codage pour le calcul et le codage d'une droite de régression pour la première variante.

Figure 11 : un schéma d'un dispositif de transcodage pour le calcul des valeurs de la grandeur dépendante à partir d'un ensemble de droites de régression codées.

Figure 12 : un schéma d'une réalisation neuronale des moyens de comparaison de la figure 10.

Figure 13 : une représentation montrant une fonction d'approximation formée de plusieurs droites.

Figure 14 : deux représentations montrant une détermination des limites de validité de deux droites consécutives.

Figure 15 : une représentation concernant le raccordement de droites consécutives.

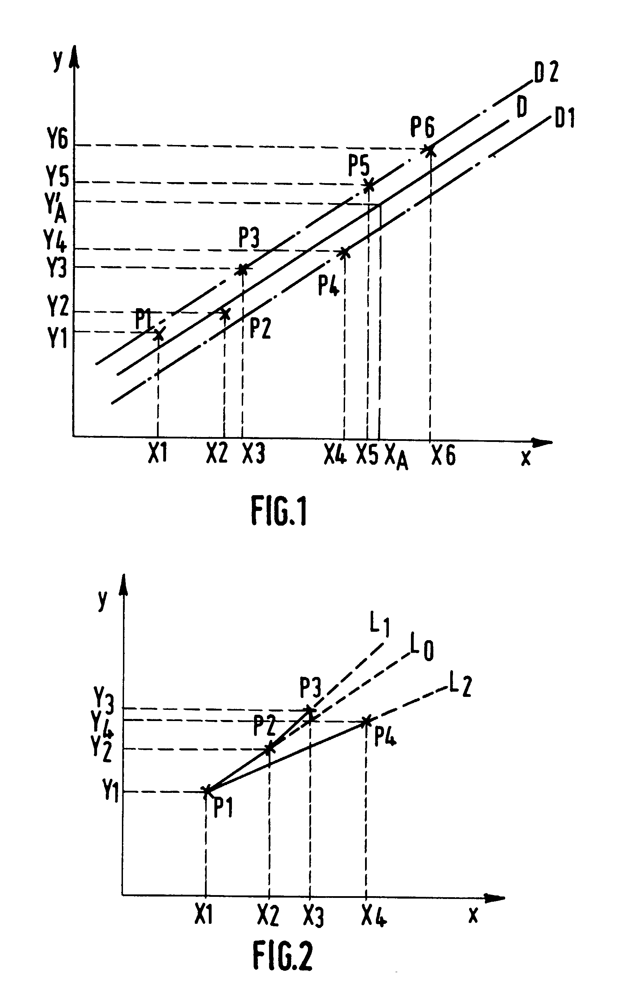

L'invention concerne l'approximation d'une fonction connue uniquement à travers un certain nombre de points par exemple $P_1$... $P_6$ (figure 1) dans une représentation à deux dimensions. Chacun de ces points est défini par un couple de valeurs (x, y) reliant la grandeur indépendante x à la grandeur dépendante y. Par la suite, il sera question d'une paire (respectivement d'un triplet) de points, ce qui met en oeuvre deux couples (respectivement trois couples) de valeurs. On ordonne les points d'après un ordre croissant des valeurs d'abscisses $X_i$, ce qui définit un indice i croissant avec lesdites valeurs. Une convention inverse peut être faite en modifiant en conséquence l'exposé ci-après.

Selon l'invention on effectue une approximation de l'ensemble des couples $(X_1, Y_1)$, $(X_2, Y_2)$... par une droite de régression D ayant pour équation :

$$(1) \qquad D : y = p.x + q.$$

où x et y sont des variables courantes.

Pour cela on considère dans une première variante trois couples de valeurs, par exemple $(X_3, Y_3)$, $(X_4, Y_4)$, $(X_5, Y_5)$, et on détermine une droite de régression D par équilibrage des erreurs absolues. Une erreur est mesurée par la différence apparaissant, pour une abscisse x donnée, entre la valeur y du point et l'abscisse y mesurée sur la droite de régression. Equilibrer les erreurs sur trois points, consiste à avoir trois erreurs égales en valeur absolue avec un signe d'erreur opposé aux deux autres pour le point ayant une abscisse x comprise entre les abscisses x des deux autres points. Puis on examine si pour les points restants de l'ensemble, l'erreur qui les sépare de la droite reste inférieure ou égale en valeur absolue à l'erreur préalablement déterminée pour les trois points sélectionnés. Ceci découle du fait que l'on s'intéresse à une erreur pire cas relative à l'ensemble de tous les points à prendre en considération c'est-à-dire la plus grande erreur, en valeur absolue, qui existe entre un des points et la droite de régression. Si toutes les erreurs sont effectivement inférieures ou égales, la droite est sélectionnée pour représenter les points sinon on recommence les opérations avec trois nouveaux couples de valeurs pour déterminer une autre droite de régression.

Il peut exister plusieurs droites de régression représentant tous les points de l'ensemble. Selon la méthode on détermine la droite de régression optimale qui minimise l'erreur pire cas définie préalablement.

La figure 1 représente un exemple formé de six points $P_1$ à $P_6$ disposés selon une représentation à deux dimensions. A des fins d'explication considérons le résultat final. On observe que la droite de régression D de la figure 1 est située de sorte que les erreurs sont égales en valeur absolue pour les points $P_3$, $P_4$ et $P_5$. Pour les points $P_1$, $P_2$, $P_6$ les erreurs sont inférieures aux précédentes, en valeur absolue. Dans un ensemble de points $P_1$ à $P_6$, la méthode va ainsi consister à rechercher les trois points particuliers, ici $P_3$, $P_4$, $P_5$, qui permettent de déterminer la droite de régression optimale qui minimise l'erreur pire cas puis à coder cette droite. Dans le cas de la figure 1 représentant un résultat final, si on trace deux droites $D_1$ et $D_2$, parallèles à la droite de régression D, qui passent respectivement par les points $P_3$, $P_5$, d'une part et $P_4$ d'autre part, on constate que tous les points de l'ensemble sont à l'intérieur d'un bandeau limité par les droites $D_1$ et $D_2$ ou sur ces droites.

La phase de détermination de la droite de régression peut donner lieu à plusieurs mises en oeuvre dont seules les plus avantageuses seront décrites ci-après.

<u>Première variante de la première phase de la méthode.</u>

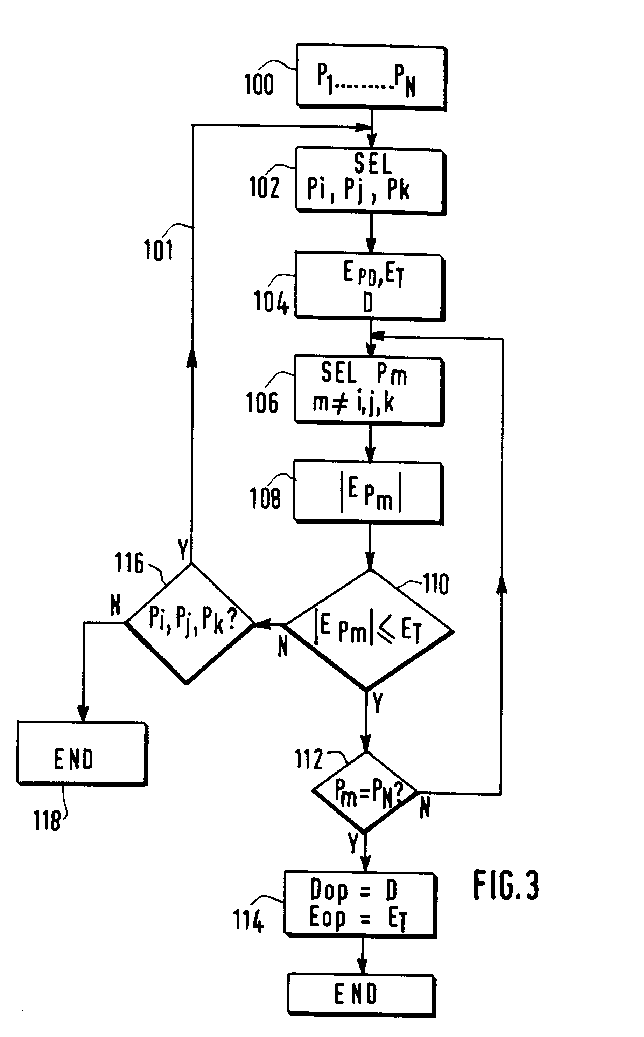

La figure 3 représente la suite des étapes à mettre en oeuvre pour déterminer la droite de régression optimale.

Parmi l'ensemble des points $P_1$... $P_N$ (bloc 100), on sélectionne (bloc 102) trois points quelconques $P_i$, $P_j$, $P_k$

avec i < j < k. Ces trois points servent à déterminer la droite de régression qui minimise l'erreur sur y pour ces trois points. Cette détermination est effectuée de manière analytique préférentiellement par des moyens programmés. On détermine une droite de régression D pour que trois erreurs (bloc 104) :

$$E_{PD} (P_i, D), E_{PD} (P_j, D), E_{PD} (P_k, D)$$

entre la droite D et chacun des points vérifient :

$$E_{PD} (P_i, D) = -E_{PD} (P_j, D) = E_{PD} (P_k, D)$$

avec

$$E_{PD} (P_i, D) = Y_i - (p.X_i + q)$$

et des relations analogues pour les autres erreurs.

On détermine la droite de régression D à l'aide des coefficients p et q de l'équation (1) tels que :

$$p = \frac{Y_k - Y_i}{X_k - X_i}$$

et

$$q = \frac{X_y.Y_i - X_i.Y_j + X_k.Y_j - X_j.Y_k + X_k.Y_i - X_i.Y_k}{2(X_k - X_i)}$$

L'erreur se rapportant à un triplet $(P_i, P_j, P_k)$ s'écrit alors :

$$E_T (P_i, P_j, P_k) = \left| E_{PD} (P_i, D) \right|$$

Lorsque l'erreur $E_T$ a été ainsi calculée, on examine si les autres points de l'ensemble engendrent des erreurs inférieures ou égales, en valeur absolue, à celles des points $P_i$, $P_j$, $P_k$. Pour cela on sélectionne un point $P_m$ (bloc 106) additionnel et on calcule la valeur absolue de l'erreur $E_{Pm}$ (bloc 108) apparaissant entre la valeur de la variable y au point $P_m$ et la droite D.

Lorsque cette erreur $E_{Pm}$ est inférieure ou égale en valeur absolue à $E_T$ (bloc 110) (repère Y), le point $P_m$ additionnel est accepté et la méthode se poursuit (bloc 112) avec un point additionnel suivant (bloc 106). Si tous les points additionnels satisfont au critère I $E_{Pm}$ I $\leq E_T$, la droite D est acceptée et ses coefficients sont utilisés pour coder la droite de régression optimale $D_{opt}$ (bloc 114).

Lorsque cette erreur $E_{Pm}$ est supérieure à $E_T$ (bloc 110) (repère N), le triplet de points $P_i$, $P_j$, $P_k$ sélectionné n'est pas accepté et un autre triplet de points (bloc 116) est choisi (lien 101) dans l'ensemble de points (bloc 102). La méthode s'achève à l'obtention de la droite D (bloc 114) satisfaisant ce critère même si tous les triplets de points n'ont pas été examinés.

Il peut apparaître des situations où à l'issue de l'étape 116 tous les points possibles ont été examinés et aucun des triplets n'a fourni de solution (bloc 118). Dans ce cas, il est possible de reprendre le déroulement de la première variante en remplaçant le test du bloc 110 par le test suivant :

$$\left| E_{Pm} \right| \leq \alpha.E_T$$

où $\alpha$ est un coefficient légèrement supérieur à 1. Dans cette même situation, il est également possible de faire appel à la deuxième variante.

La première phase peut comprendre les étapes suivantes :

A - sélection de trois couples de valeurs parmi ladite suite,

B - calcul de la fonction linéaire courante de régression D et détermination d'une erreur de triplet $E_T = I E_{PD} I$ s'y rapportant,

C - sélection d'un couple additionnel,

D - calcul d'une erreur additionnelle $E_{Pm}$ entre le couple additionnel et ladite fonction,

E - et lorsque $|E_{Pm}| \leq E_T$ (110) pour le couple additionnel, la méthode reprend à l'étape C avec un couple additionnel suivant,

F - et lorsque $|E_{Pm}| > E_T$ pour au moins un couple additionnel,

la méthode reprend à l'étape A avec une sélection d'un autre groupe de trois couples parmi ladite suite de couples,

G - et lorsque $|E_{Pm}| \leq E_T$ pour tous les couples additionnels, la fonction linéaire courante de régression est codée et stockée en tant que fonction linéaire d'approximation.

On peut choisir de scruter l'ensemble des triplets en prenant un ordre croissant ou un ordre décroissant ou un ordre aléatoire pour effectuer cet examen. Le triplet qui sera retenu pour déterminer la droite de régression pourra de ce fait être détecté à un instant quelconque du déroulement de cette scrutation. Il s'ensuit que la rapidité d'obtention de la droite de régression dépend de l'instant au cours duquel le triplet est détecté. Sa mise en oeuvre présente un degré de complexité allant de N à $N^4$ où N est le nombre de points initiaux. Sa complexité est donc réduite pour un petit nombre de points. Cette variante permet d'obtenir une réalisation matérielle avec une forte parallélisation. Elle est très peu sensible à une troncature des valeurs et fournit un résultat exact.

Deuxième variante de la première phase de la méthode.

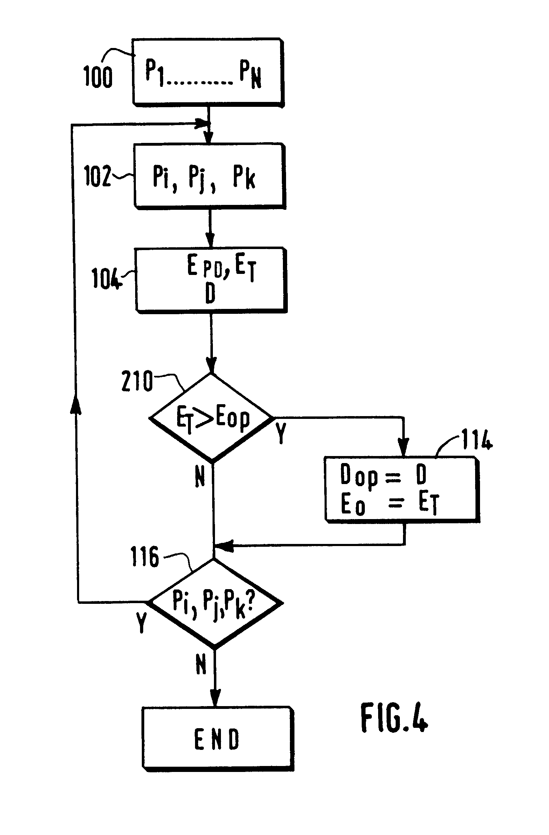

Dans cette deuxième variante (figure 4), on sélectionne successivement des triplets de points, on calcule chaque fois une droite de régression, et, par récurrence, on sélectionne celle qui délivre l'erreur $E_{PD}$ la plus grande c'est-à-dire correspondant à l'erreur pire cas pour l'ensemble de points considérés.

Selon la seconde variante, la première phase comprend les étapes suivantes :

A - sélection de trois couples de valeurs parmi ladite suite,

B - calcul d'une fonction linéaire courante de régression D et détermination d'une erreur de triplet $E_T = |E_{PD}|$ s'y rapportant,

C - comparaison de l'erreur $E_T$ avec une erreur optimale $E_{op}$ initialisée à une valeur strictement négative,

D - et lorsque $E_T > E_{op}$, mise à jour de l'erreur optimale $E_{op}$ en remplaçant $E_{op}$ par $E_T$ et mise à jour des codes d'une fonction linéaire optimale de régression $D_{op}$ en remplaçant ceux-ci par les codes de la fonction linéaire courante D,

E - puis retour à l'étape A pour sélectionner trois autres couples,

F - et lorsque tous les triplets de couples de valeurs de la suite ont été testés, les derniers codes de la fonction linéaire optimale $D_{op}$ constituent les codes de la fonction linéaire d'approximation.

A chaque examen d'un triplet, on compare l'erreur $E_T$ dudit triplet avec l'erreur optimale précédemment mémorisée et on met à jour l'erreur optimale $E_{op}$ avec la plus grande valeur de l'erreur $E_T$ déterminée pour chaque triplet. On met à jour également les paramètres de la droite optimale. Avant la mise en oeuvre de l'étape A, il faut initialiser la valeur $E_{op}$ à une valeur faible négative, par exemple -1.

Dans ce cas, la rapidité d'obtention de la droite de régression ne dépend pas du mode de scrutation des triplets. Sa complexité est de degré $N^3$. Une mise en oeuvre matérielle peut bénéficier de la grande régularité de l'algorithme mis en oeuvre. Il est peu sensible aux troncatures des données et fournit une solution exacte.

Troisième variante de la première phase de la méthode.

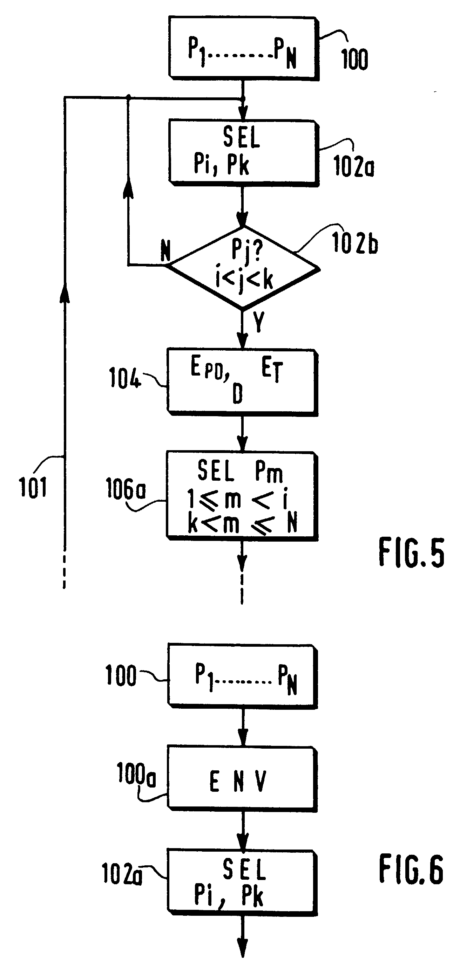

Dans cette troisième variante (figure 5), on sélectionne d'abord une paire de points à laquelle on ajoute un point supplémentaire, situé entre ces deux points, afin de former un triplet de points. Pour cela, on modifie les étapes A, B et C de la première variante, les autres étapes restant les mêmes. Les étapes modifiées sont telles que :

A1 - modifie l'étape A en opérant une sélection de deux couples de valeurs appartenant à ladite suite, tel qu'il existe au moins un couple additionnel intermédiaire ayant une grandeur indépendante $(X_1 - X_6)$ comprise entre les grandeurs indépendantes dudit couple pour constituer au moins un triplet de couples,

A2 - modifie l'étape A premièrement en déterminant une fonction linéaire annexe qui contient les deux couples sélectionnés et deuxièmement en déterminant des secondes erreurs entre les grandeurs dépendantes des couples intermédiaires possibles et ladite fonction linéaire annexe :

- et lorsque ces secondes erreurs sont toutes de même signe, sélection du couple intermédiaire fournissant la plus grande seconde erreur, en valeur absolue, pour former un triplet de couples de valeurs formé du couple intermédiaire et des deux couples sélectionnés,
- et lorsque ces secondes erreurs sont de signes différents, reprise de la méthode à l'étape A1,

B1 - l'étape B est effectuée avec ledit triplet sélectionné,

C1 - modifie l'étape C en sélectionnant un couple additionnel dont la grandeur indépendante n'est pas comprise entre la grandeur indépendante des deux couples sélectionnés.

Lorsque l'erreur I $E_{Pm}$ I est supérieure à l'erreur $E_T$ (bloc 110), la méthode reprend à l'étape A1 (lien 101) avec une nouvelle sélection de paire de points (bloc 102a).

On observe que le déroulement de cette troisième variante dépend de la scrutation des valeurs et donc des valeurs elles-mêmes. La complexité de la mise en oeuvre de cette variante varie entre N et $N^3$ ce qui lui confère un certain avantage par rapport aux variantes précédentes. Une forte parallélisation des moyens de mise en oeuvre peut être opérée mais l'implémentation des moyens peut présenter un manque de régularité ce qui peut constituer un handicap pour une réalisation intégrée. Cette variante est peu sensible aux erreurs d'arrondis des valeurs et fournit une solution exacte.

Quatrième variante de la première phase de la méthode.

Elle concerne la détermination de la droite de régression à partir des enveloppes.

Il est possible de réduire le nombre de triplets à examiner en déterminant des enveloppes respectivement supérieure et inférieure entourant les points extrêmes dans la représentation bidimensionnelle de l'ensemble de points. Une enveloppe supérieure ou une enveloppe inférieure est définie telle qu'en joignant par une droite deux points adjacents quelconques de l'enveloppe, tous les autres points soient situés d'un même côté respectivement de l'enveloppe supérieure ou de l'enveloppe inférieure. On détermine ainsi tous les points appartenant à ces dites enveloppes.

La détermination de la droite de régression va consister à considérer les paires de points adjacents d'une des enveloppes auxquels on associe un point intermédiaire n'appartenant pas à ladite enveloppe pour constituer un triplet et opérer comme cela vient d'être décrit dans le cas des paires de points de la troisième variante. Si une solution optimale n'a pas été trouvée, on considère les paires de points de l'autre enveloppe.

Pour mettre en oeuvre une enveloppe, on sélectionne une paire de points adjacents appartenant à l'enveloppe. On détermine alors s'il existe un point disposé de telle façon que son abscisse soit intermédiaire entre les abscisses des points sélectionnés. Lorsque ce point n'existe pas on passe à une autre paire de points de la même enveloppe. Pour certaines paires, lorsqu'il apparaît qu'il existe un ou plusieurs de ces points intermédiaires, on choisit le point intermédiaire le plus éloigné de la droite contenant les deux points de la paire pour former un triplet et pour déterminer une droite de régression. Pour déterminer si cette droite de régression peut être sélectionnée comme droite de régression optimale, la méthode met en oeuvre les mêmes opérations que celles décrites préalablement dans le cas de la troisième variante.

Pour cela on modifie la troisième variante telle que (figure 6), préalablement à l'étape 102a (figure 5), la première phase de la méthode comprend une étape (bloc 100a) de détermination d'une enveloppe inférieure et/ou d'une enveloppe supérieure réunissant les points les plus extrêmes de l'ensemble de points, la sélection des paires de points à l'étape 102a étant faite parmi les points adjacents appartenant à l'une ou l'autre enveloppe. La sélection de ladite paire de points est effectuée lorsqu'il existe au moins un point intermédiaire ayant une abscisse située entre les abscisses des points de la paire de points. S'il existe plusieurs points intermédiaires, on forme le triplet avec le point intermédiaire le plus éloigné de la droite passant par les deux points qui forment la paire de points. Si une solution n'est pas trouvée avec la première enveloppe, on poursuit le traitement avec la seconde enveloppe.

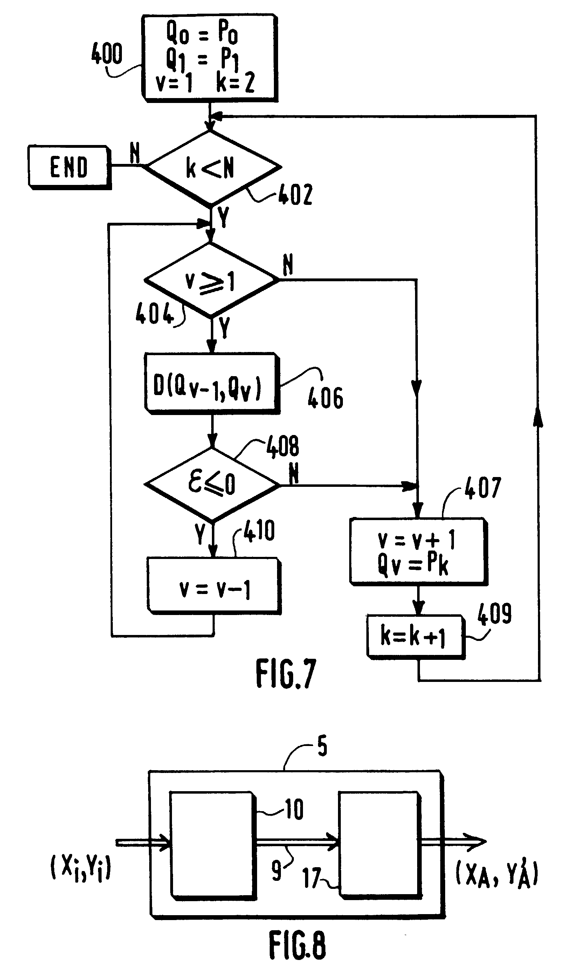

La détermination des enveloppes inférieure et supérieure est effectuée selon l'organigramme de la figure 7. L'indice des points allant croissant avec la variable x, le premier point $P_o$ fait ainsi partie des deux enveloppes. Considérons d'abord l'enveloppe inférieure, les points appartenant à l'enveloppe inférieure sont repérés par la lettre Q. Un point courant $Q_v$ est repéré par l'indice v.

A l'étape 400 les deux premiers points de l'enveloppe sont : $Q_o = P_o$ et $Q_1 = P_1$ . Le dernier point courant $Q_v$ est repéré : v = 1 pour $P_1$. Le nombre k de points traités est comptabilisé.

Etape 402 : un premier test est effectué pour déterminer si le dernier point $P_{N-1}$ a été traité pour détecter la fin de la détermination de l'enveloppe.

Etape 404 : dans le cas contraire on teste si $v \geq 1$. Lorsque v < 1 on incrémente v (v = v + 1) et on prend le point $P_k$ comme point $Q_v$ (étape 407). On incrémente l'indice k pour traiter le point P suivant (étape 409) et reprise de la méthode à l'étape 402.

Lorsque $v \geq 1$, on calcule une droite passant par les points $Q_{v-1}$ et $Q_v$ (étape 406) et on détermine le signe ε de l'erreur sur la variable dépendante entre le point $P_k$ courant et cette droite ($Q_{v-1}$, $Q_v$). Ceci a pour but de déterminer si le point courant est au-dessus ou en dessous de la droite ($Q_{v-1}$, $Q_v$).

Lorsque le signe ε ≤ o, il faut supprimer le dernier point $Q_v$, décrémenter v tel que v = v - 1 (étape 410) et reprendre la méthode à l'étape 404. On peut de cette manière être conduit à supprimer certains points déjà acceptés lorsqu'un point suivant nécessite de les supprimer.

Lorsque le signe ε est strictement positif, la méthode reprend à l'étape 407 avec un point suivant.

Cet organigramme s'applique à la détermination des enveloppes inférieure et supérieure en inversant le signe de l'erreur à considérer.

Pour faire comprendre les mécanismes ainsi mis en oeuvre considérons, à titre d'exemple, le cas simple formé par les points $P_1$, $P_2$, $P_3$, $P_4$ de la figure 2 et déterminons l'enveloppe inférieure. Le point $P_1$ est le premier point de l'enveloppe d'où $Q_o = P_1$ . On prend $P_2$ comme deuxième point $Q_1$. On calcule la droite $L_o$ reliant $P_1$, $P_2$. Le segment $P_1$, $P_2$ est accepté comme premier segment de l'enveloppe basse. On examine si $P_3$ est au-dessus de la droite $L_o$, ce qui est le cas sur la figure 2. Le segment $P_2$ $P_3$ est accepté comme deuxième segment de l'enveloppe basse. On calcule ensuite la droite $L_1$ reliant $P_2$ et $P_3$ et on examine si $P_4$ est au-dessus de la droite $L_1$. Ce n'est pas le cas sur la figure 2. Ceci entraîne que le point $P_3$ et la droite $L_1$ sont d'abord écartés. De même, $P_4$ est en dessous de la droite $L_o$ donc le point $P_2$ et la droite $L_o$ sont ensuite aussi écartés comme ne pouvant pas appartenir à l'enveloppe inférieure et les opérations se poursuivent avec la détermination de la droite $L_2$ reliant $P_1$, $P_4$, puis l'examen des points suivants (non représentés).

La complexité de mise en oeuvre de cette variante basée sur des enveloppes est de degré $N^2$ et dépend de l'ordre de scrutation des données. Cette complexité est moindre que celle des variantes précédentes et de ce fait fournit un résultat rapidement. La régularité de l'implémentation est moyenne mais cette variante est peu sensible aux erreurs d'arrondi des valeurs et délivre une solution exacte.

Pour certaines applications, il peut être souhaitable d'accroître la précision de la détermination de la fonction d'approximation dans certains domaines de la grandeur indépendante x et d'affecter des coefficients de pondération $W_i$ aux points $P_i$. C'est par exemple le cas lorsque la fonction d'approximation est faiblement variable avec la grandeur indépendante x. A certains points peuvent alors être affectés des coefficients de pondération. Ceux-ci peuvent être communs à plusieurs points ou être individuels pour chaque point. Ces coefficients de pondération $W_i$ sont, par la suite, considérés strictement positifs.

Dans les cas où des coefficients de pondération existent, on définit une erreur $E_{PD}$ entre un point $P_i$ et la droite de régression D tel que :

$$E_{PD} (P_i, D) = W_i . [Y_i - (p . X_i + q)]$$

où $E_{PD}$ est une valeur signée. La détermination de la droite de régression D pour trois points $P_i$, $P_j$, $P_k$ est alors modifiée en ce que les quantités p et q de l'équation (1) deviennent :

$$(2) \qquad p = NUMP/DET \text{ et } q = NUMQ/DET$$

où les quantités NUMP, NUMQ et DET sont définies par :

$$DET = W_i . W_j . (X_j \text{-} X_i) + W_j . W_k . (X_k \text{-} X_j) + W_i . W_k . (X_k \text{-} X_i)$$

$$NUMP = W_i . W_j . (Y_j \text{-} Y_i) + W_j . W_k . (Y_k \text{-} Y_j) + W_i . W_k . (Y_k \text{-} Y_i)$$

$$NUMQ = W_i . W_j . (X_j . Y_i \text{-} X_i . Y_j) + W_j . W_k . (X_k . Y_j \text{-} X_j . Y_k) +$$

$$W_i . W_k . (X_k . Y_i \text{-} X_i . Y_k)$$

Par ailleurs, l'erreur $E_T$ associée à ce triplet peut être exprimée et calculée par :

avec

$$E_T(P_i, P_j, P_k) = |E_{PD}(P_i, D|$$

$$E_{PD}(P_i, D) = -E_{PD}(P_j, D) = E_{PD}(P_k, D)$$

ou

$$(3) \qquad E_T = \frac{W_i \cdot W_j \cdot W_k \cdot |(X_i \cdot Y_j - X_j \cdot Y_i) + (X_j \cdot Y_k - X_k \cdot Y_j) + (X_k \cdot Y_i - X_i \cdot Y_k)|}{DET}$$

La première et la seconde variante de la méthode de la première phase décrites précédemment peuvent être mises en oeuvre en faisant intervenir les coefficients de pondération ci-dessus. Cette mise en oeuvre peut être effectuée en programmant un calculateur.

Dans le cas où l'on sélectionne une paire de points en faisant intervenir des coefficients de pondération W, la méthode présente les aménagements suivants.

Pour les points $P_i$, $P_l$, $P_k$ qui forment le triplet, on définit un facteur $F_l$ qui lie les coordonnées respectives et les coefficients de pondération respectifs des points $P_i$, $P_l$, $P_k$. Au point central 1, on associe le facteur $F_l$ tel que :

$$F_l \;=\; \frac{W_l}{X_k \,-\, X_i} \cdot \left[ \frac{X_l \,-\, X_i}{W_k} \;+\; \frac{X_k \,-\, X_l}{W_i} \right]$$

Ce facteur $F_l$ intervient dans la détermination du point intermédiaire $P_l$ qui sera à sélectionner (i < l < k) pour constituer le triplet en tenant compte des poids affectant les points. On choisit un point $P_1$ et on calcule la droite de régression $D_1$ associée au triplet $P_i$, $P_l$, $P_k$ et l'erreur $E_{Tl}$ associée au triplet.

Cette variante de la méthode consiste à modifier uniquement l'étape A2 de la troisième variante (bloc 102b, figure 5). Cette étape détermine l'existence et la valeur d'un point intermédiaire servant à former un triplet. On cherche d'abord à former une droite de régression située en dessous de $P_i$ et de $P_k$. Pour chaque point intermédiaire $P_l$, on détermine si $F_l = 1$ et $E_{PD}$ $(P_i, D_l) < 0$. Si au moins un point vérifie cette condition, il n'existe pas de droite de régression située en dessous de $P_i$ et $P_k$, sinon on détermine une grandeur $G_{max}$ qui est la quantité maximale parmi :

. d'une part les quantités $E_{PD}$ $(P_i, D_p)$ pour tous les points intermédiaires,

. d'autre part les quantités (a) suivantes, uniquement pour les points intermédiaires pour lesquels $F_l < 1$ avec

$$(a) \qquad \frac{F_l + 1}{F_l - 1} \cdot E_{PD} \; (P_i, D_l).$$

S'il existe au moins un point intermédiaire tel que $F_l > 1$, on définit également une grandeur $G_{min}$ qui est la valeur minimale prise par (a) uniquement pour les points intermédiaires tels que $F_l > 1$. On examine alors s'il existe au moins un point intermédiaire tel que :

$E_{PD}$ $(P_i, D_l) \geq 0$

$G_{max} \leq \alpha \, E_{Tl}$

et $G_{min}$. $\alpha \geq E_{Tl}$ ($\alpha$, coefficient $\geq 1$). S'il existe un tel point, il est choisi comme point intermédiaire pour former le triplet.

S'il n'existe pas de point intermédiaire tel que $F_1 > 1$, on teste s'il existe au moins un point intermédiaire tel que :

$E_{PD}$ $(P_i, D_l) \geq 0$

$G_{max} \leq \alpha . E_{Tl}$ ($\alpha$ : coefficient $\geq 1$).

Si un tel point existe, il est choisi comme point intermédiaire pour former le triplet.

Si aucun triplet n'a été constitué, on cherche à former une droite de régression située au-dessus des points $P_i$ et $P_k$. La même méthode est reprise en inversant le signe des erreurs $E_{PD}$.

Si aucun point $P_l$ ne peut être sélectionné, on recommence avec une autre paire $P_i$, $P_k$.

Lorsque l'ensemble de points à traiter est trop important pour être représenté par une seule droite de régression, la méthode code alors plusieurs droites de régression chacune étant déterminée selon la méthode décrite précédemment.

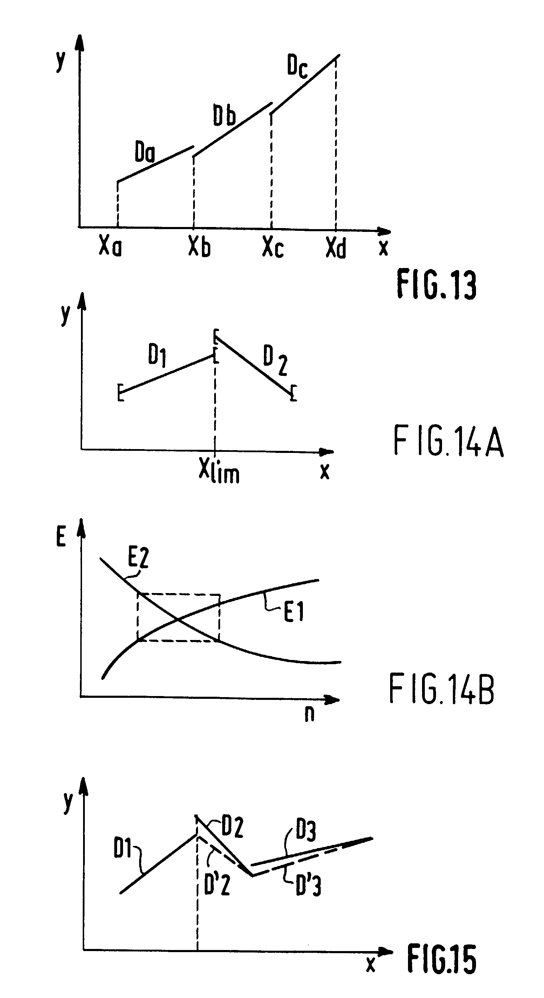

La figure 13 représente un exemple dans lequel la fonction d'approximation est constituée de plusieurs droites de régression.

Dans une première situation, de par la connaissance des grandeurs à traiter, on peut vouloir imposer des limites à chaque droite de régression suivant la grandeur indépendante x. Ainsi on peut vouloir disposer d'une droite de régression $D_a$ entre les valeurs $[X_a,X_b[$ de la grandeur, borne $x_a$ incluse, borne $x_b$ exclue. De même avec $D_b$ pour $[X_b, X_c[$ et $D_c$ pour $[X_c, X_d[$ . Dans ce cas le problème revient à déterminer une droite dans un domaine limité et à appliquer à chaque fois la méthode déjà décrite.

Mais il est possible de faire que pour chaque droite, la méthode détermine des limites suivant la grandeur indépendante x sans qu'elles soient fixées au départ.

Le principe de la détermination d'une limite optimale entre deux droites de régression adjacentes est représenté sur la figure 14-A. Soient deux droites de régression D1 et D2 non optimales. La droite D1 est déterminée à partir de N1 points et la droite D2 est déterminée à partir des N2 points restants avec N1 + N2 = N , où N est le nombre total de points. Les droites D1 et D2 forment une approximation avec respectivement des erreurs maximales E1 et E2. Supposons que E2 soit supérieure à E1 et que l'on cherche à réduire E2, il faut alors transférer vers D1 un point appartenant à D2. Lorsque le nombre de points diminue, l'erreur résultante est soit inchangée soit réduite. Lorsque le nombre de points augmente, l'erreur résultante est soit inchangée soit augmentée. En fonction du nombre n de points appartenant aux droites D1 et D2, les variations des erreurs E1 et E2 peuvent présenter les allures représentées sur la figure 14-B pour l'exemple choisi. Il s'ensuit que l'approximation obtenue globalement par D1 et D2 est optimale lorsque ces erreurs sont voisines, c'est-à-dire situées dans la zone délimitée par un trait discontinu sur la figure 14-B. Ces erreurs ne sont pas nécessairement égales compte tenu du caractère discontinu des valeurs de la grandeur indépendante.

Pour déterminer la valeur d'abscisse $X_{lim}$ entre les deux droites :

- on détermine la droite D1 sur un certain nombre de points et on calcule l'erreur E1 maximale,
- on détermine la droite D2 sur les points restants et on calcule l'erreur E2 maximale,
- on compare E1 et E2 et on transfère un point de la droite qui présente la plus forte erreur vers la droite qui présente la plus faible erreur,
- on détermine la valeur limite $X_{lim}$ lorsqu'il se produit une inversion dans le rapport entre les deux erreurs.

Cette méthode s'applique par récurrence à plusieurs droites délimitées entre elles par plusieurs limites d'abscisses.

Les droites sont déterminées à partir d'une suite discrète et limitée de grandeurs de mesure. Néanmoins, pour l'exploitation des droites de régression, il est nécessaire de définir leur domaine d'existence qui s'étend sur un continum de valeurs situées entre deux limites d'abscisses. Or la détermination des droites fournit une suite de droites qui ne se raccordent pas nécessairement par leurs extrémités. Il peut apparaître utile pour certaines applications d'éviter qu'un écart apparaisse sur la valeur de la grandeur dépendante y pour des valeurs voisines $(X_{lim} - \varepsilon)$ et $(X_{lim} + \varepsilon)$ de la grandeur indépendante où $\varepsilon$ est une très faible valeur. Il est possible de choisir que l'abscisse limite $X_{lim}$ appartienne exclusivement à l'une ou à l'autre droite. Il est aussi possible de faire suivre la détermination des suites de droite d'une procédure de raccordement de droites.

Ceci est représenté sur la figure 15. Une solution peut consister à valider la droite D1 jusqu'à l'abscisse du premier point appartenant à la droite D2 et à recalculer la droite D2 à partir de la nouvelle valeur de grandeur dépendante y ainsi déterminée. En conservant le dernier point appartenant à D2, on détermine ainsi une nouvelle droite D'2 représentée en pointillé sur la figure 15. Une procédure analogue peut être appliquée pour substituer la droite D'3 à la droite D3. On obtient ainsi un ensemble formé de plusieurs droites de régression formé, dans l'exemple décrit, par les droites D1, D'2, D'3. Cet ensemble constitue une approximation des grandeurs de mesure en réduisant une erreur maximale entre les grandeurs de mesure et l'ensemble de droites. Une variante plus adaptée à cette réduction consiste à faire que ce soient les droites correspondant aux plus fortes erreurs qui imposent leurs points limites comme points limites aux droites correspondant à des erreurs plus faibles.

Dispositif cour une mise en oeuvre de la première phase

Un schéma d'un dispositif pour générer une fonction d'approximation selon l'invention est représenté sur la figure 8. Le dispositif 5 reçoit des couples $(X_i, Y_i)$ associant la grandeur dépendante $Y_i$ à la grandeur indépendante $X_i$. Les couples $(X_i, Y_i)$ entrent dans les premiers moyens 10 pour déterminer et coder la fonction linéaire de régression formant une approximation des couples de mesure. Les codes spécifiques ainsi déterminés sont transmis (connexion 9) aux seconds moyens 17 qui déterminent des seconds couples $(X_A, Y'_A)$ d'après les codes spécifiques à la fonction d'approximation.

On distingue d'une part la seconde variante qui détermine toutes les droites de régression passant par chaque combinaison réalisable de triplets avec la suite de premiers couples, et les autres variantes pour lesquelles à chaque droite de régression déterminée (associée à son erreur $E_T$), on examine si les points additionnels restants fournissent bien des erreurs additionnelles inférieures ou égales à l'erreur de triplet $E_T$.

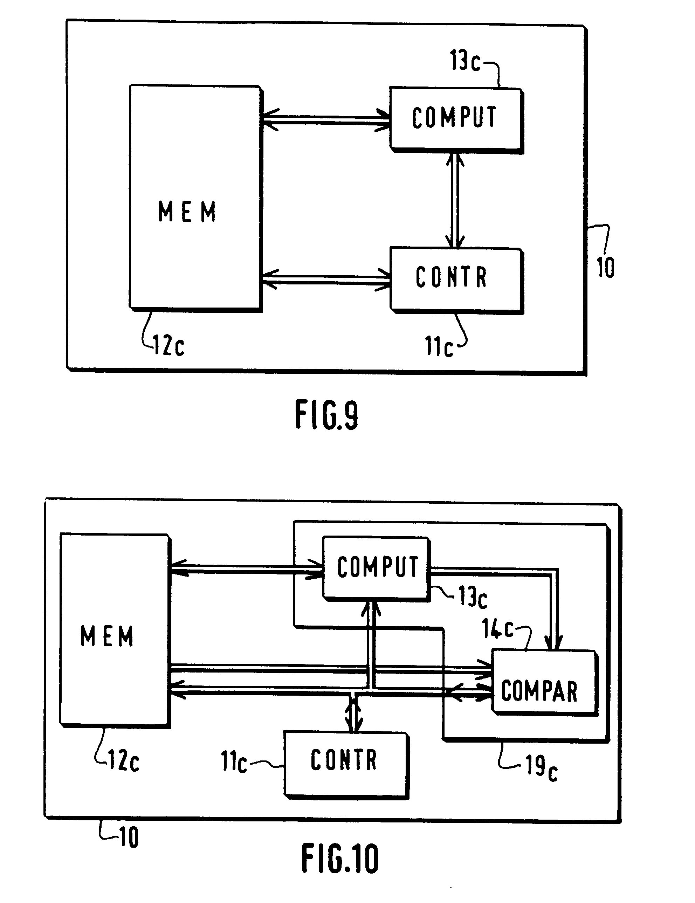

La figure 9 représente un dispositif adapté à la seconde variante. Il comprend :

- une mémoire 12c MEM qui stocke notamment tous les points appartenant à l'ensemble de points à traiter. Ces points sont représentés par leurs coordonnées (x, y), et éventuellement leurs poids W ou leurs inverses 1/W,
- une unité de calcul 13c COMPUT qui calcule, pour chaque triplet sélectionné, la droite de régression adaptée à chaque triplet, c'est-à-dire les codes p, q de la droite et l'erreur $E_T$ associée au triplet.

De plus, un contrôleur 11c CONTR permet d'effectuer la gestion des opérations et d'adresser des nouveaux triplets en effectuant les lectures/écritures de la mémoire 12c et le chargement de l'unité de calcul 13c par de nouveaux triplets. La sélection de la droite de régression qui est à conserver, c'est-à-dire pour cette variante celle délivrant la plus grande erreur de triplet, est effectuée par l'unité de calcul 13c.

La figure 10 correspond au cas des autres variantes pour lesquelles pour chaque droite courante de régression on examine si les autres points additionnels de la suite délivrent une erreur inférieure à l'erreur de triplet.

Pour cela, les premiers moyens 10 comprennent une unité de calcul 13c et une unité de comparaison 14c formant des moyens de calcul 19c.

L'unité de calcul 13c, transmet les codes p, q de la droite de régression du triplet courant à l'unité de comparaison 14c COMPAR qui détermine si les points additionnels de l'ensemble de points génèrent une erreur plus faible avec cette droite de régression que celle générée par les points du triplet courant. Pour cela, l'unité de comparaison 14c effectue le test :

$$|E_{Pm}| > E_T$$

Si la droite de régression courante n'est pas acceptée (test positif), un autre triplet est sélectionné et une procédure analogue est à nouveau effectuée. Si le test est négatif pour tous les points additionnels, la droite de régression est acceptée et ses paramètres sont chargés par l'unité de calcul 13c dans la mémoire 12c.

Pour les variantes qui opèrent à partir d'une paire de points, l'unité de calcul 13c est programmée pour déterminer les points intermédiaires et pour former les triplets issus des paires de points, ceux-ci étant eux-mêmes éventuellement issus d'enveloppes de points. Dans ce dernier cas, l'unité de calcul 13c est également programmée pour déterminer les enveloppes. L'unité de comparaison 14c effectue ensuite les comparaisons des erreurs se rapportant aux différents triplets.

Pour effectuer la gestion des opérations et adresser des nouveaux triplets (lorsque des triplets examinés n'ont pas donné satisfaction), le dispositif comprend, comme précédemment, un contrôleur 11c qui gère :

- les lectures/écritures de la mémoire 12c,
- le chargement de l'unité de calcul 13c par de nouveaux triplets,
- l'appel vers l'unité de comparaison 14c de tous les points additionnels à examiner successivement.

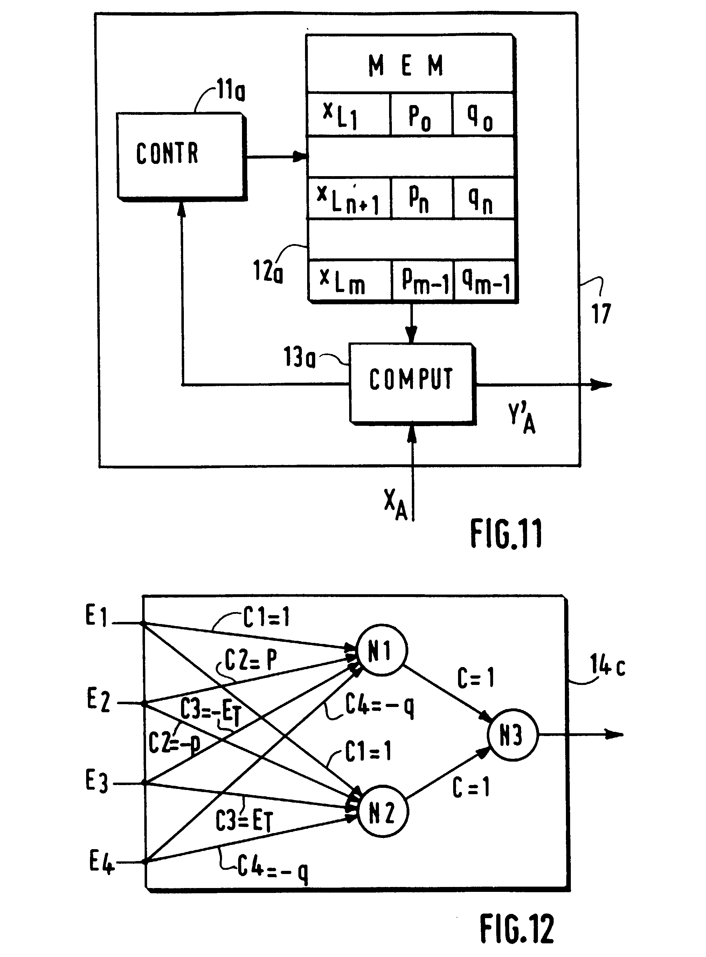

Il est possible de mettre en oeuvre la première phase de la méthode à l'aide de moyens de comparaison 14c (figure 12) ayant une structure neuronale. Considérons le cas le plus complet où il existe des coefficients de pondération associés à chaque point $P_i$. Lorsque ces coefficients n'existent pas il suffit de leur donner une valeur unité dans les explications qui vont suivre. A titre d'exemple, on peut stocker dans la mémoire 12c (figures 9, 10) les inverses des coefficients $W_i$ affectés individuellement aux points $P_i$. L'unité de calcul 13c détermine selon les équations (2) et (3), pour un triplet donné, les codes : -p, -q, $E_T$ et - $E_T$.

La condition à tester dans l'unité 14c pour un point additionnel $P_m$ à tester, de paramètres $X_m$, $Y_m$, $W_m$, est :

$$Y_m - pX_m - (E_T/W_m) - q > 0$$

ou

$$Y_m - p.X_m + (E_T/W_m) - q < 0.$$

Ces tests sont aisément réalisables par une unité 14c ayant une organisation neuronale. En effet, ce test est constitué de fonctions linéaires, de fonctions de seuillage et de fonctions logiques aisément réalisées dans un réseau de neurones.

Une telle unité neuronale de comparaison est représentée sur la figure 12. Elle comprend trois neurones N1, N2, N3. Les neurones N1 et N2 reçoivent des données E1, E2, E3, E4. Le neurone N3 reçoit les sorties des neurones N1 et N2. Chacune des entrées de ces neurones est affectée d'un coefficient synaptique Ci selon la technique connue mise en oeuvre dans les réseaux de neurones. Cette technique est par exemple décrite dans R.P. LIPPMANN, "An introduction to computing with neural nets" IEEE ASSP Magazine, April 1987, pp. 4 to 22.

Pour effectuer les tests précédents, on programme les neurones N1 et N2 selon le tableau I :

TABLEAU I

| Neurone | $E_1$ | $C_1$ | $E_2$ | $C_2$ | $E_3$ | $C_3$ | $E_4$ | $C_4$ |
|---|---|---|---|---|---|---|---|---|
| 1 | $Y_m$ | 1 | $X_m$ | - p | $1/W_m$ | $- E_T$ | 1 | - q |
| 2 | $Y_m$ | 1 | $X_m$ | - p | $1/W_m$ | $E_T$ | 1 | - q |

Tous les coefficients synaptiques du neurone N3 sont égaux à 1.

Les neurones N1 et N2 calculent chacun un potentiel neuronal s tel que : $s = \Sigma_i \, C_i . E_i$

A ce potentiel s, il faut appliquer une fonction d'activation A. Pour les neurones N1 et N3, la fonction d'activation $A_1$ est :

$$A_1(s) = 1 \text{ si } s > 0$$

$$A_1(s) = 0 \text{ si } s \leq 0.$$

Pour le neurone N2, la fonction d'activation $A_2$ est :

$$A_2(s) = 1 \text{ si } s < 0$$

$$A_2(s) = 0 \text{ si } s \geq 0.$$

La sortie du neurone N3 vaut 1 si la condition à tester est satisfaite et vaut 0 dans le cas inverse.

On observe sur le tableau I que les données -p, -q, $-E_T$, $+ E_T$ sont des codes qui apparaissent comme coefficients synaptiques dans le schéma de la figure 12. Les données $Y_m$, $X_m$, $1/W_m$ sont des données qui apparaissent sur les entrées du même schéma. Lorsque tous les points additionnels ont été testés et qu'une droite de régression a été sélectionnée les codes p, q, W chargés dans la mémoire 12c sont alors utilisés pour mettre en oeuvre la seconde phase de la méthode (figure 11).

L'intérêt présenté par la réalisation neuronale décrite est de pouvoir paralléliser les différentes opérations à mettre en oeuvre selon les variantes déjà décrites. Le fonctionnement d'une telle réalisation neuronale est alors très rapide.

Lorsque les droites de régression ont été déterminées, la seconde phase consistant à calculer des seconds couples $(X_A, Y'_A)$ de valeurs des grandeurs est alors mise en oeuvre dans des moyens de décodage 17 (figure 11). Les codes des droites sont chargés dans une mémoire 12a qui au cours de la seconde phase est adressée, par un contrôleur 11a, pour fournir les codes des droites de régression adressées. La mémoire 12a, organisée en lignes par exemple, contient pour chaque droite de régression les paramètres p, q et $x_L$ où $x_L$ est la limite supérieure d'abscisse pour laquelle chaque droite de régression est définie.

La mémoire 12a contient ainsi un tableau de paramètres

$$\frac{x_{L1}, \, p_o, \, q_o}{x_{Lm}, \, p_{m-1}, \, q_{m-1}}$$

correspondant aux m droites de régression stockées.

Les moyens de décodage 17 comprennent :

- le contrôleur $11_a$,
- la mémoire $12_a$,
- et une unité de décodage $13_a$. Celle-ci reçoit une valeur de requête $X_A$ de la grandeur indépendante pour laquelle on désire obtenir un résultat $Y'_A$ issu de la fonction d'approximation. Pour cela le contrôleur $11_a$ présente successivement certaines lignes de codes de la mémoire $12_a$ et, pour chaque ligne de codes, l'unité de décodage $13_a$ teste le code $x_L$ pour déterminer si la valeur $X_A$ de la grandeur d'entrée peut être traitée par la droite de régression codée par ladite ligne. Si cela n'est pas le cas, l'unité $13_a$ requiert du contrôleur $11_a$ une autre ligne de codes. Lorsque cette condition est vérifiée, l'unité $13_a$ effectue le calcul :

$$Y'_A = p_n . X_A + q_n$$

si la ligne d'ordre n est la ligne adéquate.

Comme cela vient d'être décrit, les premiers moyens 10 peuvent constituer un dispositif de codage et les seconds moyens 17 peuvent constituer un dispositif de décodage, les deux dispositifs étant séparés. Ils peuvent en effet être distants l'un de l'autre, les opérations de codage étant séparées des opérations de décodage. Mais les deux moyens 10 et 17 peuvent aussi former un dispositif de codage/décodage unique. Dans ce cas certains organes peuvent être affectés successivement à plusieurs opérations. Notamment :

- il peut s'agir d'une mémoire 12 unique qui peut stocker les paramètres des couples de valeurs et les codes des droites de régression déterminées. Les unités 12a et 12c forment alors la mémoire 12,
- il peut s'agir d'un contrôleur 11 unique qui regroupe les fonctions des contrôleurs 11c et 11a,
- l'unité de calcul 13c et l'unité de décodage 13a peuvent également former une seule unité 13.

Il est également possible de réaliser les moyens de décodage 17 (figure 11) selon une organisation à structure parallèle. Une solution consiste alors à comparer, en parallèle, la grandeur de requête $X_A$ à tous les codes $x_L$. On obtient un ensemble de signaux $T_L$ représentant les résultats de ces tests de comparaison. On réalise ensuite, en parallèle, pour toutes les valeurs de L, un test qui combine deux à deux les signaux $T_L$ et $T_{L+1}$ et qui indique si la grandeur de requête $X_A$ est dans l'intervalle d'indice L. Ce test est vérifié pour une unique valeur de L, notée n. On accède alors aux codes $p_n$ et $q_n$ correspondants, et on en déduit la grandeur $Y'_A$ de la même manière que précédemment.

Les premiers moyens 10 (de codage) associés aux seconds moyens 17 (de décodage) peuvent être utilisés pour déterminer la valeur d'une fonction d'approximation par au moins une droite de régression. Ces déterminations peuvent être effectuées pour des valeurs quelconques de la grandeur indépendante (à l'intérieur de bornes prédéfinies définissant l'étendue de l'action de chaque droite de régression). Cette méthode évite de stocker inutilement des tables de valeurs, pour lesquelles toutes les valeurs ne seront pas exploitées. Selon la méthode on ne détermine que les seules valeurs nécessaires à l'application. La méthode selon l'invention présente l'intérêt de ne calculer que les valeurs nécessaires. Le dispositif de l'invention peut être utilisé en combinaison avec un processeur neuronal pour calculer une approximation d'une fonction non linéaire par exemple une fonction sigmoïde. Un processeur neuronal calcule des potentiels neuronaux issus de sommes de produits de coefficients synaptiques par des états de neurones. La technique est développée dans le document de R.P. LIPPMANN déjà cité. Chaque potentiel neuronal doit être soumis à l'action d'une fonction non linéaire. Pour cela, chaque potentiel neuronal constitue la grandeur indépendante décrite précédemment et le calcul de la fonction th(x) par exemple est effectué pour les seules valeurs de requêtes utiles. La méthode fournit des valeurs approximées, mais cette approximation peut être obtenue avec une précision qui peut être accrue selon le nombre de droites de régression calculées et éventuellement les coefficients de pondération W. La précision reste néanmoins tributaire de la précision des coordonnées des couples de départ.

Une telle méthode est particulièrement intéressante pour les calculs de fonctions connues (telles que des fonctions mathématiques) ou de fonctions inconnues explicitement, par exemple une fonction représentée par des points de mesures, que l'on désire simplifier par une fonction linéaire de régression.

Dans sa version neuronale, l'invention est intéressante dans des applications neuronales car elle apporte non seulement un traitement homogène mais aussi une grande compacité de l'architecture matérielle nécessaire.

Il est possible de combiner les variantes de la méthode, dans leurs mises en oeuvre matérielles pour combiner leurs avantages. Ainsi par exemple, les combinaisons suivantes sontavantageuses :

Dans le cas où les poids existent, deux combinaisons apparaissent intéressantes :

- Dans la première combinaison, on utilise tout d'abord la première variante basée sur des triplets de points. Si une solution n'est pas trouvée, on enchaîne avec la deuxième variante basée aussi sur des triplets de points. Ceci permet d'obtenir les avantages suivants :

.   Quelles que soient les données, on obtient une solution.
.   Dans le cas où on exige qu'on obtienne toujours une solution exacte, cette combinaison permet d'obtenir la rapidité maximale. En effet, dans le cas général la solution est fournie directement par la première variante appelée, qui est celle fournissant le plus rapidement une solution exacte dans le cas où les poids existent. La deuxième variante est beaucoup plus lente mais elle permet de garantir que la combinaison fournit toujours une solution.

.   Dans la deuxième combinaison, on utilise tout d'abord la variante basée sur des paires de points. Si elle ne trouve pas une solution (qui peut être approchée), on utilise la deuxième variante basée sur des triplets de points. Ceci permet d'obtenir les avantages suivants :

.   Quelles que soient les données, on obtient une solution (éventuellement approchée).
.   Cette combinaison est en moyenne plus rapide que la précédente.
.   En contrepartie, elle ne fournit généralement qu'une solution approchée.

Dans le cas où les poids n'existent pas, une combinaison intéressante consiste à utiliser tout d'abord la variante basée sur l'enveloppe des points. Si elle ne trouve pas de solution, on utilise la deuxième variante basée sur des triplets de points. Ceci permet d'obtenir les avantages suivants :

.   Quelles que soient les données, on obtient une solution,
.   Cette combinaison permet d'obtenir la meilleure rapidité moyenne.

Lorsque la fonction linéaire de régression a été déterminée selon la méthode décrite, il est possible de déterminer non seulement des grandeurs $Y'_A$ ressortissant à ladite fonction mais également des grandeurs ressortissant à la dérivée de ladite fonction. En effet, pour une valeur de requête $X_A$ de la grandeur indépendante, il suffit d'extraire des moyens de mémorisation la valeur p ressortissant à la valeur $X_A$ pour connaître la valeur de cette dérivée correspondante.

**Revendications**

1.  Dispositif (5) pour générer une fonction d'approximation fondée sur des premiers couples (($X_1$, $Y_1$) à ($X_6$, $Y_6$)) de valeurs associant une grandeur dépendante ($Y_1$ à $Y_6$) à une grandeur indépendante ($X_1$ à $X_6$), et pour déterminer des seconds couples ($X_A$, $Y'_A$) de valeurs desdites grandeurs d'après ladite fonction d'approximation caractérisé en ce que le dispositif comprend :

    -   des premiers moyens (10) adaptés :

        -   pour déterminer itérativemant au moins une droite courante de régression D ayant pour équation D: y = p + q où x et y sont des variables courantes, en rendant égales, en valeur absolue, des premières erreurs, de signes alternés, mesurées entre des premières valeurs ($Y_3$, $Y_4$, $Y_5$) de la grandeur dépendante pour trois couples ($X_3$, $Y_3$) ($X_4$, $Y_4$) ($X_5$, $Y_5$) d'une suite desdits premiers couples, et respectivement des secondes valeurs ($Y'_3$, $Y'_4$, $Y'_5$) de la grandeur dépendante déterminées, d'après ladite droite courante de régression, pour les mêmes valeurs ($X_3$, $X_4$, $X_5$) de la grandeur indépendante,
        -   pour sélectionner celle des droites courantes de régression qui délivre l'approximation de tous les couples de ladite suite avec des erreurs minimales,
        -   et pour coder, à l'aide de codes spécifiques p, q, la droite de régression sélectionnée,

    -   et des seconds moyens adaptés (17) pour déterminer lesdits seconds couples ($X_A$, $Y'_A$) à l'aide desdits codes spécifiques.

2.  Dispositif selon la revendication 1 caractérisé en ce que lesdits premiers moyens (10) comprennent :

    -   des moyens adaptés (12c) pour mémoriser les grandeurs des premiers couples et lesdits codes spécifiques p et q,

- des moyens adaptés (13c) (19c) pour calculer successivement les codes spécifiques p, q de droites courantes de régression et leurs premières erreurs, égalisées en valeur absolue, respectives $E_T$ et pour sélectionner au moins une droite courante de régression,

- et des moyens adaptés (11c) pour contrôler lesdits moyens (12c) pour mémoriser et lesdits moyens (13c) pour calculer.

3. Dispositif (5) selon les revendications 1 ou 2 caractérisé en ce que pour sélectionner ladite droite de régression, lesdits premiers moyens comprennent des moyens (14c) adaptés :

- pour déterminer pareillement des erreurs additionnelles pour les autres couples $(X_1, Y_1)$ $(X_2, Y_2)$ $(X_6, Y_6)$ de valeurs de ladite suite,
- pour comparer les erreurs additionnelles avec lesdites premières erreurs égalisées $E_T$,
- et pour sélectionner la droite courante de régression qui fournit des erreurs additionnelles inférieures ou égales en valeur absolue auxdites premières erreurs égalisées $E_T$.

4. Dispositif selon la revendication 2 caractérisé en ce que, pour sélectionner la droite de régression, lesdits moyens adaptés pour calculer (13c) sélectionnent celle des droites courantes de régression qui délivre des premières erreurs égalisées $E_T$ maximales.

5. Dispositif selon une des revendications 1 à 4 caractérisé en ce que lesdits seconds moyens (17) comprennent :

- des moyens adaptés (12a) pour mémoriser lesdits codes spécifiques p et q d'au moins une droite de régression,
- des moyens adaptés (13a) pour sélectionner, sur requête d'une valeur de grandeur indépendante $X_A$, une droite de régression ressortissant à ladite valeur, et pour calculer, à partir des codes spécifiques p et q reçus des moyens pour mémoriser, une valeur de grandeur dépendante $Y'_A$ associée à la valeur de grandeur indépendante $X_A$,
- et des moyens (11a) pour adresser aux moyens pour calculer, et sur leur demande, les codes spécifiques p et q des droites de régression.

6. Dans un dispositif pour générer une fonction d'approximation fondée sur des premiers couples $((X_1, Y_1) - (X_6, Y_6))$ de valeurs associant une grandeur dépendante $(Y_1 - Y_6)$ à une grandeur indépendante $(X_1 - X_6)$, méthode pour générer ladite fonction d'approximation à partir des premiers couples $(X_1, Y_1)$ $(X_6, Y_6)$ de valeurs, et pour déterminer des seconds couples $(X_A, Y'_A)$ de valeurs desdites grandeurs d'après ladite fonction d'approximation, caractérisée en ce que, la méthode comprend :

- une première phase :

  - pour déterminer itérativement au moins une droite courante de régression D ayant pour équation D: y = p + q où x et y sont des variables courantes, en rendant égales, en valeur absolue, des premières erreurs $E_{PD}$, de signes alternés, mesurées entre des premières valeurs $(Y_3, Y_4, Y_5)$ de la grandeur dépendante pour trois couples $(X_3, Y_3)$, $(X_4, Y_4)$ $(X_5, Y_5)$ d'une suite desdits premiers couples, et respectivement des secondes valeurs $(Y'_3, Y'_4, Y'_5)$ de la grandeur dépendante déterminée, d'après ladite droite courante de régression, pour les mêmes valeurs $(X_3, X_4, X_5)$ de la grandeur indépendante,
  - pour sélectionner celle des droites courantes de régression qui délivre l'approximation de tous les couples de ladite suite avec des erreurs minimales,
  - et pour coder la droite de régression sélectionnée à l'aide de codes spécifiques p et q,

- et une seconde phase pour déterminer lesdits seconds couples $(X_A, Y'_A)$ à l'aide desdits codes spécifiques p et q.

7. Méthode selon la revendication 6 caractérisée en ce que la première phase comprend les étapes suivantes :

A - sélection (102) de trois couples (P3, P4, P5) de valeurs parmi ladite suite,
B - calcul (104) de la droite courante de régression D et détermination d'une erreur de triplet $E_T = |E_{PD}|$ s'y rapportant,
C - sélection (106) d'un couple additionnel (P1, P2, P6),

D - calcul (108) d'une erreur additionnelle $E_{Pm}$ entre le couple additionnel et ladite fonction,

E - et lorsque $| E_{Pm} | \leq E_T$ (110) pour le couple additionnel, la méthode reprend à l'étape C avec un couple additionnel suivant,

F - et lorsque $| E_{Pm} | > E_T$ pour au moins un couple additionnel (110), la méthode reprend à l'étape A avec une sélection d'un autre groupe de trois couples parmi ladite suite de couples,

G - et lorsque $| E_{Pm} | \leq E_T$ pour tous les couples additionnels (112), la droite courante de régression est codée et stockée (114) en tant que fonction linéaire d'approximation.

8. Méthode selon la revendication 6 caractérisée en ce que la première phase comprend les étapes suivantes :

A - sélection (102) de trois couples (P3, P4, P5) de valeurs parmi ladite suite,

B - calcul (104) d'une droite courante de régression D et détermination d'une erreur de triplet $E_T = | E_{PD} |$ s'y rapportant,

C - comparaison (210) de l'erreur $E_T$ avec une erreur optimale $E_{op}$ initialisée à une valeur strictement négative,

D - et lorsque $E_T > E_{op}$, mise à jour (114) de l'erreur optimale $E_{op}$ en remplaçant $E_{op}$ par $E_T$ et mise à jour des codes d'une droite optimale de régression $D_{op}$ en remplaçant ceux-ci par les codes de la droite courante de régression D,

E - puis retour (116) à l'étape A pour sélectionner trois autres couples (102),

F - et lorsque tous les triplets de couples de valeurs de la suite ont été testés (116), les derniers codes de la droite optimale de régression $D_{op}$ constituent les codes de la fonction linéaire d'approximation (114).

9. Méthode selon la revendication 8 caractérisée en ce que la première phase comprend les étapes modifiées suivantes :

A1 - modifie l'étape A en opérant une sélection (102a) de deux couples de valeurs appartenant à ladite suite, tel qu'il existe au moins un couple additionnel intermédiaire ayant une grandeur indépendante ($X_1$ - $X_6$) comprise entre les grandeurs

indépendantes dudit couple pour constituer au moins un triplet de couples de valeurs,

A2 - modifie l'étape A premièrement en déterminant (102b) une droite annexe de régression qui contient les deux couples sélectionnés et deuxièmement en déterminant des secondes erreurs entre les grandeurs dépendantes des couples intermédiaires possibles et ladite droite annexe de régression:

. et lorsque ces secondes erreurs sont toutes de même signe, sélection du couple intermédiaire fournissant la plus grande seconde erreur, en valeur absolue, pour former un triplet de couples de valeurs formé du couple intermédiaire et des deux couples sélectionnés,

. et lorsque ces secondes erreurs sont de signes différents, reprise de la méthode à l'étape A1,

B1 - l'étape B (104) est effectuée avec ledit triplet sélectionné,

C1 - modifie l'étape C (106) en sélectionnant (106a) un couple additionnel dont la grandeur indépendante n'est pas comprise entre la grandeur indépendante des deux couples sélectionnés.

10. Méthode selon la revendication 9 modifiée en ce que, préalablement à l'étape A1, lesdits couples de valeurs étant représentés par des points (P1 - P6) dans un espace à deux dimensions, la première phase de la méthode comprend une étape (100a) de détermination d'une enveloppe inférieure et/ou d'une enveloppe supérieure réunissant les points les plus extrêmes de l'ensemble de points, la sélection des deux couples de valeurs à l'étape A1 étant faite parmi les points adjacents appartenant à l'une ou l'autre enveloppe.

11. Méthode selon une des revendications 6 à 10 caractérisée en ce qu'à chaque valeur, prise dans la suite de valeurs de la grandeur indépendante, est associée un coefficient spécifique de pondération qui pondère lesdites premières erreurs.

12. Méthode selon une des revendications 6 à 11 caractérisée en ce qu'elle génère une fonction d'approximation comprenant une suite de droites de régression raccordées entre elles.

EP 0 624 847 B1

**Patentansprüche**

1. Gerät (5) zum Erzeugen einer Annäherungsfunktion auf der Basis erster Wertpaare (($X_1$, $Y_1$) bis ($X_6$, $Y_6$)), die eine abhängige Variable ($Y_1$ bis $Y_6$) mit einer unabhängigen Variablen ($X_1$ bis $X_6$) verknüpft, und zum Bestimmen zweiter Wertpaare ($X_A$, $Y'_A$) der Variablen entsprechend der Annäherungsfürktion, <u>dadurch gekennzeichnet</u>, daß das Gerät folgende Mittel enthält:

   - erste Mittel (10):
   - zum iterativen Bestimmen wenigstens einer aktuellen Regressionslinie D mit der Gleichung $y = px + q$, worin x und y aktuelle Variable sind, durch Angleichen erster Fehler mit wechselndem Vorzeichen im Absolutwert, die zwischen ersten Werten ($Y_3$, $Y_4$, $Y_5$) der abhängigen Variablen für drei Paare ($X_3$, $Y_3$)($X_4$, $Y_4$)($X_5$, $Y_5$) einer Reihe der ersten Paare bzw. zweiter Werten ($Y'_3$, $Y'_4$, $Y'_5$) der abhängigen Variablen gemessen sind, die entsprechend der aktuellen Regressionslinie für dieselben Werte der unabhängigen Variablen bestimmt sind.
   - zum Wählen jener der aktuellen Regressionslinien, die die Annäherung aller Paare der Reihe mit Mindestfehlem erzeugt, und
   - zum Codieren der gewählten Regressionslinie mit Hilfe spezifischer Codes (p, q), und
   - zweite Mittel (17) zum Bestimmen der zweiten Paare ($X_A$, $Y'_A$) mit Hilfe der spezifischen Codes.

2. Gerät nach Anspruch 1, <u>dadurch gekennzeichnet,</u> daß das erste Mittel (10) folgende Elemente enthält:

   Speichermittel (12c) zum Speichern der Werte der ersten Paare und der spezifischen Codes p und q,
   Rechenmittel (13c)(19c) zum aufeinanderfolgenden Berechnen der spezifischen Codes p, q aktueller Regressionslinien und ihrer betreffenden ersten Fehler mit Angleich im Absolutwert $E_T$, und zum Wählen zumindest einer aktuellen Regressionslinie, und
   Mittel (11c) zum Steuern der Speichermittel (12c) und der Rechenmittel (13c).

3. Gerät (5) nach Anspruch 1 oder 2, <u>dadurch gekennzeichnet</u>, daß zum Wählen der Regressionslinie das erste Mittel Mittel (14c) enthält:

   zum gleichartigen Bestimmen von Zusatzfehlern für die anderen Wertpaare ($X_1$, $Y_1$)($X_2$, $Y_2$)($X_6$, $Y_6$) der Reihe,
   zum Vergleichen der Zusatzfehler mit den angeglichenen ersten Fehler $E_T$, und
   zum Wählen der aktuellen Regressionslinie, die Zusatzfehler ausgibt, die im Absolutwert kleiner als oder gleich den angeglichenen ersten Fehlern $E_T$ sind.

4. Gerät nach Anspruch 2, <u>dadurch gekennzeichnet</u>, daß zum Wählen der Regressionslinie die Rechenmittel (13c) jene der aktuellen Regressionslinien wählen, die die maximalen angeglichenen ersten Fehler $E_T$ abgeben.

5. Gerät nach einem oder mehreren der Ansprüche 1 bis 4, <u>dadurch gekennzeichnet</u>, daß die zweiten Mittel folgende Elemente enthalten:

   - Speichermittel (12a) zum Speichern der spezifischen Codes p und q zumindest einer Regressionslinie,
   - Rechenmittel (13a) zum Wählen einer zum Wert gehörenden Regressionslinie in Beantwortung eines Werts der unabhängigen Variablen $X_A$, und zum Berechnen eines dem Wert der unabhängigen Variablen $X_A$ zugeordneten Werts der abhängigen Variablen $Y'_A$, ausgehend von den spezifischen aus dem Speichermittel empfangenen Codes p und q, und
   - Mittel (11a) zum Adressieren der spezifischen Codes p und q der Regressionslinie an die Rechenmittel bei Anforderung der spezifischen Codes p und q der Regressionslinien vom Mittel.

6. Verfahren zum Erzeugen einer Annäherungsfunktion auf der Basis erster Wertpaare (($X_1$, $Y_1$) bis ($X_6$, $Y_6$)), die eine abhängige Variable ($Y1$ bis $Y_6$) mit einer unabhängigen Variablen ($X_1$ bis $X_6$) verknüpft, und zum Bestimmen zweiter Wertpaare ($X_A$, $Y'_A$) der Variablen entsprechend der Annäherungsfunktion in einem Gerät zum Erzeugen einer Annäherungsfunktion auf der Basis erster Wertpaare (($X_1$, $Y_1$) bis ($X_6$, $Y_6$)), die eine abhängige Variable ($Y_1$ bis $Y_6$) mit einer unabhängigen Variablen ($X_1$ bis $X_6$) verknüpft, und zum Bestimmen zweiter Wertpaare ($X_A$, $Y'_A$) der Variablen entsprechend der Annäherungsfunktion, <u>dadurch gekennzeichnet</u>, daß das Verfahren folgende Schritte umfaßt:

   - eine erste Phase:

- zum iterativen Bestimmen wenigstens einer aktuellen Regressionslinie D mit der Gleichung D: $y = px + q$, worin x und y aktuelle Variable sind, mittels Angleichen erster Fehler mit wechselndem Vorzeichen im Absolutwert, wobei diese ersten Fehler zwischen ersten Werten $(Y_3, Y_4, Y_5)$ der abhängigen Variablen für drei Paare $(X_3, Y_3)$, $(X_4, Y_4)$, $(X_5, Y_5)$ einer Reihe der ersten Paare bzw. zweiten Werten $(Y'_3, Y'_4, Y'_5)$ der abhängigen Variablen gemessen sind, die entsprechend der aktuellen Regressionslinie für dieselben Werte $(X_3, X_4, X_5)$ der unabhängigen Variablen bestimmt sind,

- zum Wählen jener der aktuellen Regressionslinien, die die Annäherung aller Paare der Reihe mit Mindestfehlern erzeugen, und

- zum Codieren der gewählten Regressionslinie mit Hilfe spezifischer Codes p und q, und

- eine zweite Phase zum Bestimmen der zweiten Paare $(X_A, Y'_A)$ mit Hilfe der spezifischen Codes p und q.

7. Verfahren nach Anspruch 6, <u>dadurch gekennzeichnet</u>, daß die erste Phase folgende Schritte umfaßt:

A - Wählen (102) von drei Wertpaaren (P3, P4, P5) aus der Reihe,
B - Berechnen (104) der aktuellen Regressionslinie D und Bestimmen eines zugeordneten Tripelfehlers $E_T = |E_{PD}|$,
C - Wählen (106) eines Zusatzpaares (P1, P2, P6),
D - Berechnen (108) eines Zusatzfehlers $E_{Pm}$ zwischen dem Zusatzpaar und der Funktion,
E - wenn $|E_{PD}| \leq E_T$ (110) für das Zusatzpaar (110) ist, geht das Verfahren mit dem Schritt C eines folgenden Zusatzpaares weiter, und
F - wenn $|E_{PD}| > E_T$ für wenigstens ein Zusatzpaar (110) ist, geht das Verfahren weiter mit dem Schritt A mit einer Auswahl aus einer anderen Gruppe von drei Paaren der Paarreihe, und G - wenn $|E_{Pm}| \leq E_T$ für alle Zusatzpaare (112) ist, wird die aktuelle Regressionslinie codiert und als Linearannäherungsfunktion gespeichert (114).

8. Verfahren nach Anspruch 6, <u>dadurch gekennzeichnet,</u> daß die erste Phase folgende Schritte umfaßt:

A - Wählen (102) von drei Wertpaaren (P3, P4, P5) aus der Reihe,
B - Berechnen (104) der aktuellen Regressionslinie D und Bestimmen eines zugeordneten Tripelfehlers $E_T = |E_{PD}|$,
C - Vergleichen (210) des Fehlers $E_T$ mit einem Optimalfehler $E_{op}$ mit einem strikt negativen Anfangswert,
D - wenn $E_T > E_{op}$ ist, Auffrischen (114) des Optimalfehlers $E_{op}$ durch den Austausch von $E_{op}$ gegen $E_T$ und Auffrischen der Codes einer optimalen Regressionslinie $D_{op}$ durch den Austausch dieser Codes gegen die Codes der Regressionslinie,
E - anschließende Rückkehr (116) nach Schritt A zum Wählen von drei anderen Paaren, und
F - wenn alle Tripel von Wertpaaren der Reihe überprüft sind (116), bilden die letzten Codes der optimalen Regressionslinie$D_{op}$ die Codes der Linearannäherungsfunktion (114).

9. Verfahren nach Anspruch 8, <u>dadurch gekennzeichnet,</u> daß die erste Phase folgende geänderte Schritte umfaßt:

A1 - Ändern des Schrittes A durch eine solche Wahl (102a) von zwei zur Reihe gehörenden Wertpaaren, daß sich zumindest ein zusätzliches Zwischenpaar mit einer unabhängigen Variablen $(X_1 - X_6)$ zwischen den unabhängigen Variablen des Paares zur Bildung zumindest eines Tripelpaares befindet,
A2 - Ändern des Schritts A zunächst durch Bestimmen (102a) einer Zusatzregressionslinie, die das zweite gewählte Paar enthät, und zweitens durch Bestimmen zweiter Fehler zwischen den abhängigen Variablen der möglichen Zwischenpaare und der Zusatzregressionslinie:

. und, wenn diese zweiten Fehler alle dasselbe Vorzeichen haben, das Wählen des Zwischenpaares zum Erzeugen des zweiten Fehlers mit dem größten Absolutwert zur Bildung eines Tripelpaares der vom Zwischenpaar und den zwei gewählten Paaren gebildeten Werte,
. und wenn diese zweiten Fehler verschiedene Vorzeichen haben, Fortsetzen des Verfahrens im Schritt A1,

B1 - Schritt B (104) wird mit dem gewählten Tripel durchgeführt,
C1 - Ändern des Schritts C (106) durch die Wahl eines Zusatzpaares, dessen unabhängige Variable nicht zwischen den unabhängigen Variablen der zwei gewählten Paare liegt.

10. Verfahren nach Anspruch 9, in dem Sinne geändert, daß vor dem Schritt A1 die Wertpaare als Punkte (P1 - P6) in einem zweidimensionalen Raum dargestellt werden, wobei die erste Phase des Verfahrens einen Schritt (100a) zum Bestimmen einer unteren Umhüllenden und einer oberen Umhüllenden umfaßt, die die Außenpunkte der Punktgruppe verbinden, und die Wahl der zwei Wertpaare im Schritt A1 aus benachbarten zu einer der Umhüllenden gehörenden Punkten getroffen wird.

11. Verfahren nach einem oder mehreren der vorangehenden Ansprüche 6 bis 10, <u>dadurch gekennzeichnet,</u> daß ein spezifischer Gewichtungskoeffizient, der das Gewicht der ersten Fehler bestimmt, jedem Wert in der Wertreihe der unabhängigen Variablen zugeordnet wird.

12. Verfahren nach einem oder mehreren der vorangehenden Ansprüche 6 bis 10, <u>dadurch gekennzeichnet,</u> daß damit eine Annäherungsfunktion mit einer Reihe verknüpfter Regressionslinien erzeugt wird.

## Claims

1. A device (5) for generating an approximation function based on first pairs (($X_1$, $Y_1$) to ($X_6$, $Y_6$)) of values associating a dependent variable ($Y_1$ to $Y_6$) with an independent variable ($X_1$ to $X_6$), and for determining second pairs ($X_A$, $Y'_A$) of values of said variables in accordance with said approximation function, characterised in that the device comprises:

   - first means (10) adapted:

      - to iteratively determine at least one current regression line D satisfying the equation D: $y = px + q$, where x and y are current variables, by making first errors of alternating sign equal in absolute value, which first errors have been measured between, respectively, first values ($Y_3$, $Y_4$, $Y_5$) of the dependent variable for three pairs ($X_3$, $Y_3$) ($X_4$, $Y_4$) ($X_5$, $Y_5$) of a series of said first pairs, and second values ($Y'_3$, $Y'_4$, $Y'_5$) of the dependent variable determined, in accordance with said current regression line, for the same values ($X_3$, $X_4$, $X_5$) of the independent variable,
      - to select that one of the current regression lines which produces the approximation of all the pairs of said series with minimal errors,
      - and to code the selected regression line with the aid of specific codes p, q,

   - and second means (17) adapted to determine said second pairs ($X_A$, $Y'_A$) with the aid of said specific codes.

2. A device as claimed in Claim 1, characterised in that said first means (10) comprise:

   - storage means (12c) adapted to store the values of the first pairs and said specific codes,
   - calculation means (13c) (19c) adapted to successively calculate the specific codes p, q of current regression lines and their respective first errors, equalised in absolute value ($E_T$), and to select at least one current regression line,
   - and means (11c) adapted to control said storage means (12c) and said calculation means (13c).

3. A device (5) as claimed in Claim 1 or 2, characterised in that for selecting said regression line said first means comprise means (14c) adapted:

   - to likewise determine additional errors for the other pairs ($X_1$, $Y_1$) ($X_2$, $Y_2$) ($X_6$, $Y_6$) of values of said series,
   - to compare the additional errors with said equalised first errors $E_T$,
   - and to select the current regression line which yields additional errors which, in absolute value, are smaller than or equal to said equalised first errors $E_T$.

4. A device as claimed in Claim 2, characterised in that for selecting the regression line said calculation means (13c) are adapted to select that one of the current regression lines which yields maximal equalised first errors $E_T$.

5. A device as claimed in any one of the Claims 1 to 4, characterised in that said second means (17) comprise:

   - means (12a) adapted to store said specific codes p and q of at least one regression line,
   - means (13a) adapted to select, in response to a value of the independent variable $X_A$, a regression line belonging to said value, and to calculate, starting from the specific codes p and q received from the storage means, a value of the dependent variable $Y'_A$ associated with the value of the independent variable $X_A$,
- and means (11a) for addressing the specific codes p and q of the regression lines to the calculation means at their request.

6. In a device for generating an approximation function based on first pairs $((X_1, Y_1) - (X_6, Y_6))$ of values associating a dependent variable ($Y_1$ to $Y_6$) with an independent variable ($X_1$ to $X_6$), a method of generating said approximation function based on first pairs $(X_1, Y_1)$ $(X_6, Y_6)$ of values, and for determining second pairs $(X_A, Y'_A)$ of values of said variables in accordance with said approximation function, characterised in that the method comprises:

- a first phase:

  - for iteratively determining at least one current regression line D satisfying the equation D: $y = px + q$, where x and y are current variables, by making first errors ($E_{PD}$) of alternating sign equal in absolute value, which first errors have been measured between, respectively, first values ($Y_3$, $Y_4$, $Y_5$) of the dependent variable for three pairs $(X_3, Y_3)$, $(X_4, Y_4)$, $(X_5, Y_5)$ of a series of said first pairs and second values ($Y'_3$, $Y'_4$, $Y'_5$) of the dependent variable determined, in accordance with said current regrssion line, for the same values $(X_3, X_4, X_5)$ of the independent variable,
  - for selecting that one of the current regression lines which produces the approximation of all the pairs of said series with minimal errors,
  - and for coding the selected regression line with the aid of specific codes p and q,

- and a second phase for determining said second pairs $(X_A, Y'_A)$ with the aid of said specific codes p and q.

7. A method as claimed in Claim 6, characterised in that the first phase includes the following steps:

  A - selecting (102) three pairs (P3, P4, P5) of values from said series,
  B - calculating (104) the current regression line D and determining an associated triplet error $E_T = |E_{PD}|$,
  C - selecting (106) an additional pair (P1, P2, P6),
  D - calculating (108) an additional error $E_{Pm}$ between the additional pair and said function,
  E - if $|E_{Pm}| \leq E_T$ (110) for the additional pair (110) the method proceeds with step C with a following additional pair,
  F - and if $|E_{Pm}| > E_T$ for at least one additional pair (110) the method proceeds with step A with a selection of another group of three pairs from said series of pairs,
  G - and if $|E_{Pm}| \leq E_T$ for all the additional pairs (112) the current regression line is coded and stored (114) as a linear approximation function.

8. A method as claimed in Claim 6, characterised in that the first phase includes the following steps:

  A - selecting (102) three pairs (P3, P4, P5) of values from said series,
  B - calculating (104) the current regression line D and determining an associated triplet error $E_T = |E_{PD}|$,
  C - comparing (210) the error $E_T$ with an optimum error $E_{op}$ having a strictly negative initial value,
  D - and if $E_T > E_{op}$ updating (114) the optimum error $E_{op}$ by replacing $E_{op}$ by $E_T$ and updating the codes of an optimum regression line $D_{op}$ by replacing these codes by the codes of the current regression line D,
  E - subsequently returning (116) to step A to select three other pairs,
  F - and when all the triplets of pairs of values of the series have been checked (116) the last codes of the optimum regression line $D_{op}$ will form the codes of the linear approximation function (114).

9. A method as claimed in Claim 8, characterised in that the first phase includes the following modified steps:

  A1 - modification of step A by effecting a selection (102a) of two pairs of values belonging to said series, such that there is at least one additional intermediate pair with an independent variable ($X_1$ - $X_6$) situated between the independent variables of said pair in order to form at least one triplet of pairs of values,
  A2 - modification of step A, firstly, by determining (102b) a subsidiary regression line which contains the two selected pairs and, secondly, by determining second errors between the dependent variables of the possible intermediate pairs and said subsidiary regression line:

    . and, when these second errors all have the same sign, selecting the intermediate pair producing the second error having the largest absolute value in order to form a triplet of pairs of values formed by the intermediate pair and the two selected pairs,
. and, when these second errors have different signs, resuming the method in step A1,

B1 - step B (104) is effected with said selected triplet,
C1 - modification of step C (106) by selecting an additional pair whose independent variable is not situated between the independent variables of the two selected pairs.

10. A method as claimed in Claim 9, modified in that, prior to the step A1, said pairs of values being represented as points (P1 - P6) in a two-dimensional space, the first phase of the method includes a step (100a) to determine a lower envelope and/or an upper envelope which interconnect the outer points of the set of points, the selection of the two pairs of values in the step A1 being made from adjacent points belonging to one of the envelopes.

11. A method as claimed in as claimed in any one of the Claims 6 to 10, characterised in that a specific weighting coefficient, which weights said first errors, is associated with each value in the series of values of the independent variable.

12. A method as claimed in any one of the Claims 6 to 11, characterised in that it generates an approximation function comprising a series of interlinked regression lines.

FIG.1

FIG.2

FIG.3

FIG.4

FIG.5

FIG.6

400 
$$Q_0 = P_0$$
$$Q_1 = P_1$$
$$v = 1 \quad k = 2$$

END ←— N — $k < N$ —402

Y

$v \geq 1$ — N

404

Y

$D(Q_{v-1}, Q_v)$ —406

408

$\varepsilon \leq 0$ — N

Y —410

$v = v - 1$

407

$$v = v + 1$$
$$Q_v = P_k$$

409

$k = k + 1$

**FIG.7**

5

10

$(X_i, Y_i)$

9 — 17

$(X_A, Y_A^i)$

**FIG.8**

FIG.9

FIG.10

**FIG.11**

**FIG.12**

FIG.13

FIG.14A

FIG.14B

FIG.15